# EUROPEAN PATENT APPLICATION

(11) **EP 4 563 783 A1**
(43) Date of publication of application: **04.06.2025**
(21) Application number: 23845204.9
(22) Date of filing: 29.06.2023
(51) Int. Cl.: E05F 15/71, B60S 1/04

(54) **VEHICLE CONTROL METHOD, VEHICLE, AND STORAGE MEDIUM**

(30) Priority: 26.07.2022 CN 202210883958
(71) Applicant: BYD Company Limited, Shenzhen, Guangdong 518118 (CN)
(72) Inventor: CHENG, Ziyun, Shenzhen, Guangdong 518118 (CN); LIANG, Junlei, Shenzhen, Guangdong 518118 (CN); CAO, Weisi, Shenzhen, Guangdong 518118 (CN); ZENG, Shuai, Shenzhen, Guangdong 518118 (CN); SU, Kai, Shenzhen, Guangdong 518118 (CN)
(74) Representative: Mathys & Squire
(86) International application number: PCT/CN2023/103846
(87) International publication number: WO 2024/021991

(57) **Abstract**

A vehicle control method. A vehicle (100) is provided with a UWB sensor (20). The method comprises: step S1, in response to a trigger instruction for starting rainfall detection, waking up the UWB sensor (20), such that the UWB sensor (20) measures a rainfall value; step S2, acquiring the rainfall value detected by the UWB sensor (20); and step S3, according to the rainfall value, controlling the vehicle (100) to execute a preset control instruction action. Also disclosed are a vehicle (100) and a storage medium. According to the method, the real-time rainfall can be accurately and reliably detected, and the application of vehicle control based on rainfall detection is enriched.

## Description

### CROSS-REFERENCE TO RELATED APPLICATIONS

The present disclosure claims priority to Chinese Patent Application No. 202210883958.4, entitled "VEHICLE CONTROL METHOD, VEHICLE, AND STORAGE MEDIUM" and filed on July 26, 2022. The entire content of the above-referenced application is incorporated herein by reference.

### FIELD

The present disclosure relates to the field of vehicles, and in particular, to a vehicle control method, a vehicle, and a storage medium.

### BACKGROUND

At present, a rainfall detection device used during rainfall detection includes, for example, a capacitive raindrop sensor, a resistive raindrop sensor, an infrared raindrop sensor, a piezoelectric vibrator raindrop sensor, or a charge-coupled device (CCD) raindrop sensor. These sensors for detecting rainfall have shortcomings in precision and reliability of real-time rainfall detection. In addition, an application of rainfall detection in vehicle control is relatively narrow.

### SUMMARY

The present disclosure aims to solve at least one of the technical problems existing in the related art. Therefore, an objective of the present disclosure is to propose a vehicle control method. The method can precisely and reliably detect real-time rainfall and enrich an application of vehicle control based on rainfall detection.

A second objective of the present disclosure is to propose a vehicle.

A third objective of the present disclosure is to propose a computer-readable storage medium.

In order to achieve the above objectives, a vehicle control method according to an embodiment of a first aspect of the present disclosure is provided. A vehicle is provided with an ultra wide band (UWB) sensor configured to measure a rainfall value. The method includes: The UWB sensor is waken up in response to a trigger instruction for starting rainfall detection, to cause the UWB sensor to measure a rainfall value. The rainfall value measured by the UWB sensor is acquired. The vehicle is controlled to execute a preset control instruction action according to the rainfall value.

In some examples, the vehicle includes a vehicle window, and that the vehicle is controlled to execute a preset control instruction action according to the rainfall value includes: It is determined that the rainfall value reaches a preset window closing rainfall threshold, and the vehicle window is controlled to close, in response to detecting that the vehicle window is in an open state.

In some examples, the vehicle includes a wiper, and that the vehicle is controlled to execute a preset control instruction action according to the rainfall value further includes: It is determined that the rainfall value meets a preset rain wiping condition, and the wiper is controlled to wipe rain at a target speed, in response to detecting that the vehicle is in a driving state. The target speed is determined according to a preset mapping relationship, and the mapping relationship represents a corresponding relationship between a speed of the wiper and the rainfall value.

In some examples, the rain wiping condition is that the rainfall value is greater than the window closing rainfall threshold, and that the wiper is controlled to wipe rain at a target speed includes: A target speed gear for an action of the wiper is determined according to the rainfall value, and the wiper is controlled to wipe rain at a speed of the target speed gear.

In some examples, that a target speed gear for controlling an action of the wiper is determined according to the rainfall value, and the wiper is controlled to wipe rain at a speed of the target speed gear includes: The wiper is controlled to act at a first speed if the rainfall value is greater than the window closing rainfall threshold and less than a first rainfall threshold, or the wiper is controlled to act at a second speed if the rainfall value is greater than the first rainfall threshold and less than a second rainfall threshold, the second speed being greater than the first speed, or the wiper is controlled to act at a third speed if the rainfall value is greater than the second rainfall threshold, the third speed being greater than the second speed. The first rainfall threshold is greater than the window closing rainfall threshold, and the second rainfall threshold is greater than the first rainfall threshold.

In some examples, the vehicle control method further includes: In-vehicle multimedia is controlled to perform rainfall prompting and speed limit warning, and the vehicle is controlled to drive at a limited speed in the case of rainfall, in response to the rainfall value being greater than the second rainfall threshold.

In some examples, the vehicle includes a vehicle window, and before the response to a trigger instruction for starting rainfall detection, the vehicle control method further includes: The trigger instruction for starting rainfall detection is sent when it is detected that the vehicle is in a power-off state and the vehicle window of the vehicle is in an open state, or the trigger instruction for starting rainfall detection is sent when it is detected that the vehicle is in an ignition state.

In some examples, the vehicle control method further includes: The UWB sensor is controlled to remain in a sleep state when it is detected that the vehicle is in the power-off state, and it is detected that the vehicle window of the vehicle is in a closed state.

In some examples, that the UWB sensor is waken up, to cause the UWB sensor to measure the rainfall value includes: A signal emitter of the UWB sensor is controlled to emit an electromagnetic wave signal. A signal receiver of the UWB sensor is controlled to receive the electromagnetic wave signal propagated through a preset spatial range. The rainfall value is calculated and obtained according to a time of flight of the received electromagnetic wave signal.

A vehicle according to an embodiment of a second aspect of the present disclosure includes: a UWB sensor, where the UWB sensor is configured to detect a rainfall value; at least one processor; and a memory. The memory stores a computer program executable by the at least one processor, and the computer program, when executed by the at least one processor, implements the vehicle control method according to any example of the first aspect of the present disclosure.

In some examples, the UWB sensor is arranged on a vehicle body of the vehicle.

In some examples, the UWB sensor is arranged at a top of a front end of the vehicle, a top of a rear end of the vehicle or a top of a middle portion of the vehicle.

In some examples, the UWB sensor includes: a UWB signal emitter, where the UWB signal emitter is configured to emit an electromagnetic wave signal;
a UWB signal receiver, where the UWB signal receiver is configured to receive the electromagnetic wave signal propagated through a preset spatial range; and a control module, where the control module is configured to calculate and obtain the rainfall value according to a time of flight of the received electromagnetic wave signal.

In some examples, the UWB signal emitter and the UWB signal receiver are arranged at a top of the vehicle, and the UWB signal receiver is arranged opposite to the UWB signal emitter at a preset distance.

A computer-readable storage medium according to an embodiment of a third aspect of the present disclosure is provided. The computer-readable storage medium stores a computer program, and the computer program, when executed by a processor, implements the vehicle control method according to any example of the first aspect of the present disclosure.

The vehicle, the method, and the storage medium according to the examples of the present disclosure have at least the following technical effects:

In the vehicle control method, the vehicle, and the storage medium according to the examples of the present disclosure, the rainfall is detected based on the UWB sensor, and the UWB sensor emits an electromagnetic wave, which is less affected by the environment and has high anti-interference performance. Therefore, a detected real-time rainfall value is more accurate and stable, and the vehicle is controlled to execute a preset control instruction action according to the rainfall value. That is, the rainfall detection is combined with vehicle body control, thereby enriching the application of the rainfall detection in vehicle control.

Some of the additional aspects and advantages of the present disclosure are set forth in the following description, and some become apparent from the following description, or are learned by practice of the present disclosure.

### BRIEF DESCRIPTION OF THE DRAWINGS

The above and/or additional aspects and advantages of the present disclosure become apparent and readily comprehensible from the description of examples with reference to the following accompanying drawings, in which:
FIG. 1 is a top view of a vehicle according to an example of the present disclosure;
FIG. 2 is a flowchart of a vehicle control method according to an example of the present disclosure;
FIG. 3 is a block diagram of a UWB sensor according to an example of the present disclosure;
FIG. 4 is a flowchart of a control method in a vehicle power-off state according to an example of the present disclosure;
FIG. 5 is a block diagram of a rainfall detection and vehicle body state control system according to an example of the present disclosure;
FIG. 6 is a flowchart of a method for controlling a vehicle window and a wiper when a vehicle is in a driving state according to an example of the present disclosure; and
FIG. 7 is a block diagram of a vehicle according to an example of the present disclosure.

### Reference signs:

Vehicle 100;
vehicle body 10, UWB sensor 20, body control module 30, memory 40, and at least one processor 50;
UWB signal emitter 21, UWB signal receiver 22, and control module 23.

### DETAILED DESCRIPTION

Examples described with reference to the accompanying drawings are exemplary, and the examples of the present disclosure are described in detail below.

In a relevant scheme of rainfall detection, a generally used rainfall detection device includes, for example, a capacitive raindrop sensor, a resistive raindrop sensor, an infrared raindrop sensor, a piezoelectric vibrator raindrop sensor, or a CCD raindrop sensor. However, these sensors for detecting rainfall have shortcomings in precision and reliability of real-time rainfall detection. In addition, in terms of rainfall detection control logic, a detected rainfall magnitude is not closely related to logic of vehicle body state control, such as sunroof and vehicle window opening-closing control, wiper speed adjustment, and vehicle speed adjustment, which leads to a relatively single application of rainfall detection in vehicle control.

In a vehicle control method according to an example of the present disclosure, a detected more accurate real-time rainfall value can be obtained by detecting the rainfall based on an ultra wide band (UWB) sensor that a vehicle is provided with, and an application of rainfall detection in vehicle control can be enriched by combining the rainfall detection with vehicle body state control.

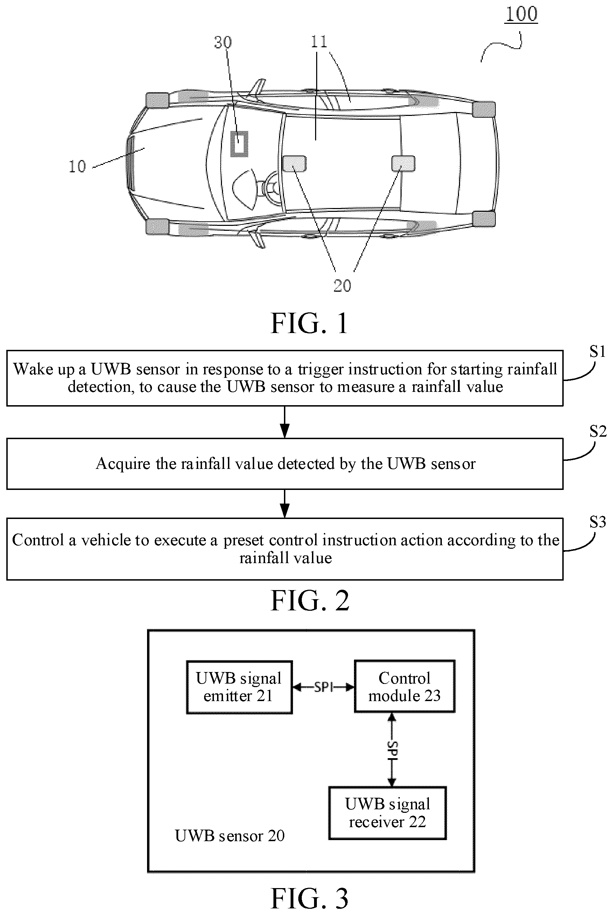

The vehicle control method according to the example of the present disclosure is described below with reference to FIG. 1 to FIG. 6.

In the example of the present disclosure, a vehicle is provided with a UWB sensor, and rainfall is detected in real time by the UWB sensor. FIG. 1 is a schematic diagram of a vehicle according to an example of the present disclosure. As shown in FIG. 1, a vehicle 100 includes a vehicle body 10, a UWB sensor 20, a body control module 30, and a vehicle execution device such as a vehicle window, a wiper, and in-vehicle multimedia. Of course, the vehicle 100 further includes other basic structures and systems, which are not listed one by one here.

The UWB sensor 20 is connected to the body control module 30. The UWB sensor 20 uses a UWB technology. By a principle that electromagnetic waves emitted by the UWB sensor have different propagation times in different media, a propagation time of the electromagnetic waves in the case of different rainfall values can be correspondingly associated with the rainfall values, so that the UWB sensor 20 can automatically detect a moisture content in the air based on a time of flight of the electromagnetic waves and detect the rainfall value.

Moreover, the UWB detection technology is not affected by a light environment, so using the UWB sensor 20 to detect rainfall has high accuracy and stability. In addition, with the development of in-vehicle intelligence, UWB is used more and more in vehicles, such as welcoming guests and high-precision positioning. Therefore, using the UWB sensor 20 to detect rainfall does not require additional hardware, and is low in cost.

FIG. 2 is a flowchart of a vehicle control method according to an example of the present disclosure. As shown in FIG. 2, the vehicle control method according to the example of the present disclosure includes at least steps S1 to S3 as follows.

S1: A UWB sensor is waken up in response to a trigger instruction for starting rainfall detection, to cause the UWB sensor to measure a rainfall value.

In some examples, as shown in FIG. 3, a UWB sensor 20 may include a UWB signal emitter 21, a UWB signal receiver 22, and a control module 23. The UWB signal emitter 21 and the UWB signal receiver 22 may be arranged at a top of the vehicle, so as to detect rainfall more effectively and accurately, and the UWB signal receiver 22 is arranged opposite to the UWB signal emitter 21 at a preset distance.

The signal emitter of the UWB sensor is controlled to emit an electromagnetic wave signal during rainfall detection. The signal receiver of the UWB sensor is controlled to receive the electromagnetic wave signal propagated through a preset spatial range. The rainfall value is calculated and obtained according to a time of flight of the received electromagnetic wave signal.

Specifically, rainfall detection based on the UWB technology uses the principle that electromagnetic waves propagate at different speeds in different media. The vehicle according to the example of the present disclosure uses the UWB sensor as a new use manner, and the UWB signal emitter 21 and the UWB signal receiver 22 are placed on both sides of an object to be detected. A medium directly affects data detected by the UWB sensor 20, or the data detected by the UWB sensor 20 is affected by the medium that electromagnetic waves pass through. The electromagnetic waves released by the UWB sensor 20 pass through air and water, and a proportion of the air and the water in an electromagnetic wave motion path of the UWB sensor 20 directly affects data measured by the UWB sensor 20. A propagation speed of electromagnetic waves in water is less than that in air. A proportion of water in an electromagnetic wave propagation path is in a linear relationship with the data detected by the UWB sensor 20. A speed at which electromagnetic waves pass through a detection space is much faster than that of rainwater passing through the detection space, so that it can be believed that a position of the rainwater relative to the detection space is static within a time during which electromagnetic waves propagate back and forth through the detection space. In this case, the UWB sensor 20 can measure a ratio θ of a volume of water to a volume of the detection space at a moment, that is, a proportion of the water in the detection space. A proportion of the water in a certain space can be used as an index to measure rainfall. θ may be used as an index to measure the rainfall. A large value of the rainfall index denotes a high rainwater content in the air and a high rainfall intensity. The UWB sensor 20 can measure the index in real time. The UWB signal emitter 21 transmits an electromagnetic wave to the UWB signal receiver 22, and the UWB signal receiver 22 detects a current rainfall magnitude through a processing operation by the control module 23 according to a time of flight of the received electromagnetic wave.

A transmission time of electromagnetic waves emitted by the UWB is calculated according to a time-of-flight (TOF) calculation principle (t=d/v). Transmission times of the electromagnetic waves emitted by the UWB signal emitter 21 in different media (such as air and water) are different, and a rainfall magnitude is determined according to the fact that the transmission time of electromagnetic waves becomes longer when there is large rainfall and the transmission time of electromagnetic wave becomes shorter when there is small rainfall. In this way, high accuracy of detecting the rainfall magnitude and high anti-interference performance are achieved. In addition, the principle of rainfall detection by the UWB sensor is simple, which can control the vehicle body (such as vehicle speed adjustment) in coordination with a body domain, thereby bringing better experience to a user.

In some examples, in a driving state, it is detected that the vehicle is in an ignition state, and a trigger instruction for starting rainfall detection is sent. Therefore, the UWB sensor 20 can be automatically waked up, and the UWB sensor 20 starts to operate, that is, to detect rainfall. Alternatively, in some other examples, the vehicle includes a vehicle window, and in a power-off state, when it is detected that the vehicle is in a power-off state and the vehicle window of the vehicle is in an open state, a trigger instruction for starting rainfall detection is sent. That is, in response to an engine of the vehicle flaming out and the vehicle window being in the open state, the UWB sensor 20 can be automatically waked up, and the UWB sensor 20 starts to operate, that is, to detect rainfall. Alternatively, the user may set another trigger condition to automatically wake up the UWB sensor 20. Therefore, the UWB sensor 20 can be automatically waked up more intelligently without a manual operation by the user, especially when the user forgets to close the window in the power-off state.

S2: The rainfall value detected by the UWB sensor is acquired.

For example, the UWB sensor sends the detected rainfall value to a vehicle domain controller, such as the body control module, and the body control module receives the rainfall value and combines the rainfall value with a vehicle body state, thereby enriching an application of rainfall detection in vehicle control.

S3: The vehicle is controlled to execute a preset control instruction action according to the rainfall value.

Specifically, the vehicle execution device is connected to the body control module 30, and the vehicle execution device is configured to execute a preset control action on the vehicle body according to a control signal, such as controlling the vehicle window to be opened or closed, adjusting an action speed of the wiper, and controlling the in-vehicle multimedia to play relevant information, that is, to closely relate a detected rainfall magnitude to logic of vehicle body state control, such as sunroof and vehicle window opening-closing control, wiper speed adjustment, and vehicle speed adjustment in terms of rainfall detection control logic, thereby enriching the application of rainfall detection in vehicle control.

In the vehicle control method according to the example of the present disclosure, real-time rainfall is detected based on the UWB sensor, and the UWB sensor emits an electromagnetic wave, which is less affected by the environment and has high anti-interference performance. Therefore, a detected real-time rainfall value is more accurate and stable. Moreover, the rainfall detection is combined with the vehicle body control, and the vehicle body is controlled to execute a preset control action according to the rainfall value, thereby enriching the application of the rainfall detection in vehicle control.

In some examples, the vehicle includes a vehicle window, and that the vehicle is controlled to execute a preset control instruction action according to the rainfall value may specifically include: It is determined that the rainfall value reaches a preset window closing rainfall threshold, and the vehicle window is controlled to close, in response to detecting that the vehicle window is in an open state.

The window closing rainfall threshold can be determined according to whether the rainfall affects property safety in the vehicle.

Specifically, the body control module compares a received real-time rainfall value detected by the UWB sensor with the preset window closing rainfall threshold, and controls, if the rainfall value reaches the window closing rainfall threshold and there is a vehicle window in an open state, such as a vehicle side window or a sunroof, the vehicle window in the open state to close, so that rainwater can be prevented from entering the vehicle and accumulating, thereby avoiding an economic loss caused to the user when the vehicle window is not closed in the case of rainfall.

In the vehicle control method according to the example of the present disclosure, the UWB sensor of the vehicle is waken up to detect the rainfall, and the UWB sensor emits an electromagnetic wave, which is less affected by the environment and has high anti-interference performance, so that the detected real-time rainfall value is more accurate and stable. Moreover, the UWB sensor obtains the rainfall through a time of flight of the electromagnetic wave, and an algorithm principle is simple. The rainfall detection is combined with the vehicle window control, thereby enriching the application of the rainfall detection in vehicle control. When the rainfall value is greater than the window closing rainfall threshold, the opened vehicle window is controlled to close, so that rainwater, especially rainstorm water, can be prevented from entering the vehicle, thereby avoiding an economic loss caused to the user when the vehicle window is not closed in the case of rainfall.

In some examples, the UWB sensor is controlled to automatically enter a sleep mode when the vehicle is in a power-off state, and it is detected that the vehicle window is in a closed state. For example, in the power-off state, the body control module detects whether the vehicle side window and the sunroof are open. If there is a vehicle window in the open state, the body control module wakes up the UWB sensor, and controls the opened vehicle window to close when the rainfall value reaches the window closing rainfall threshold. If no vehicle window is in an open state, the UWB sensor automatically enters a sleep mode to reduce energy consumption.

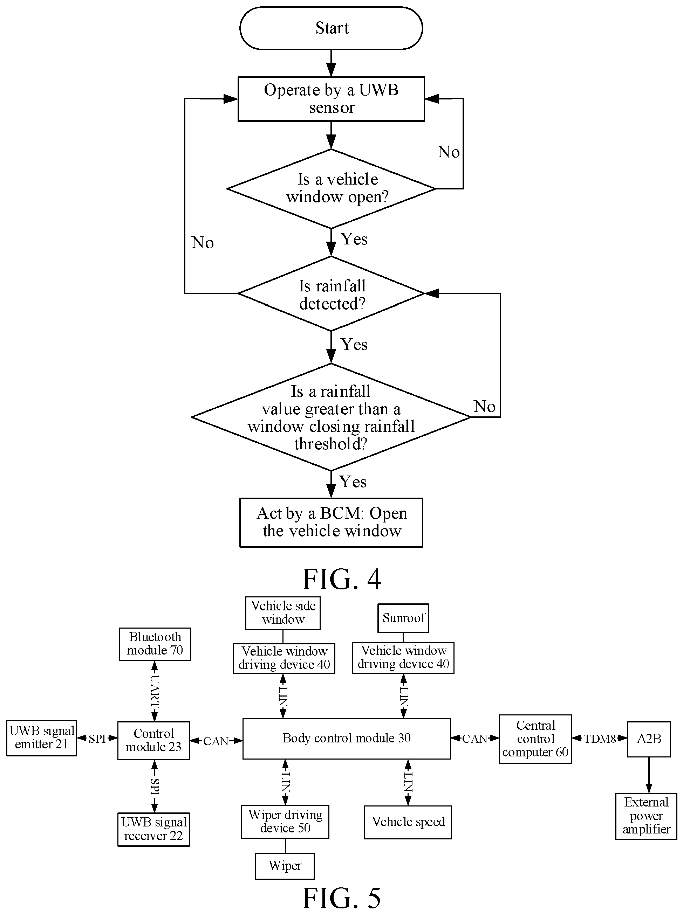

Specifically, FIG. 4 is a flowchart of a control method in a vehicle power-off state according to an example of the present disclosure, and FIG. 5 is a block diagram of a rainfall detection and vehicle body state control system according to an example of the present disclosure. As shown in FIG. 4 and FIG. 5, when the vehicle is in a power-off state, a body control module (BCM) first detects whether a vehicle window or a sunroof is in a closed state. If the vehicle window or the sunroof is in the closed state in this case, the UWB sensor enters a sleep state to reduce power consumption of the whole vehicle. When the BCM detects that the vehicle window or the sunroof is in an open state, the BCM transmits message information to the UWB sensor through a CAN bus, and the UWB sensor starts real-time rainfall detection. When the UWB sensor detects that a water content in the air is increasing and exceeds a trigger threshold set by software, for example, when it is detected that a water content θ in the air is greater than a window closing rainfall threshold θ1, a control module of the UWB sensor determines that it is raining, and transmits the message information to the BCM through the CAN bus. Then the BCM controls the vehicle window or the sunroof to close through a LIN bus to prevent rainwater from entering the vehicle, protect articles in the vehicle from getting wet and prevent property of the user from being damaged.

In some examples of the present disclosure, the rainfall detection may further be combined with wiper control of the vehicle. That the vehicle is controlled to execute a preset control instruction action according to the rainfall value may specifically include: It is determined that the rainfall value meets a preset rain wiping condition, and the wiper is controlled to wipe rain at a target speed, in response to detecting that the vehicle is in a driving state, where the target speed is determined according to a preset mapping relationship, and the mapping relationship represents a corresponding relationship between a speed of the wiper and the rainfall value. The preset rain wiping condition can be set as required, for example, when the rainfall value is greater than a value or less than a value or between two values, which may not be specifically limited here. For example, when the vehicle is in a driving state, an action speed of the wiper of the vehicle is controlled according to the rainfall value detected by the UWB sensor, where a greater rainfall value indicates a higher wiper action speed. Therefore, driving safety can be improved.

The method for controlling the action speed of the wiper based on rainfall in the example of the present disclosure can be applied not only to a conventional vehicle wiper, but also to other wipers having the same effect as a physical wiper such as an ultrasonic cleaning wiper and a gas wiper.

In some examples, different speed gears for a wiper action can be set, and different speed gears are suitable for different rainfall, so that a driver can see road conditions clearly during rainfall through the vehicle window, thereby improve driving safety on a rainy day. For example, the rain wiping condition may be that the rainfall value is greater than the window threshold. In this case, it is believed that the rainfall may affect the driver's sight through the vehicle window, so that the wiper is controlled to act at an appropriate speed to improve driving safety. For example, that the wiper is controlled to wipe rain at a target speed may specifically include: A target speed gear for an action of the wiper is determined according to the rainfall value, and the wiper is controlled to wipe rain at a speed of the target speed gear.

For example, two speed gears of the wiper may be set. For example, if the wiper is controlled to act at a first speed if the rainfall value is greater than the window closing rainfall threshold and less than a first rainfall threshold, where the first rainfall threshold is greater than the window closing rainfall threshold. The wiper is controlled to act at a second speed if the rainfall value is greater than the first rainfall threshold and less than a second rainfall threshold, where the second rainfall threshold is greater than the first rainfall threshold, and the second speed is greater than the first speed. Alternatively, three speed gears for a wiper action may be set. Further, the wiper is controlled to act at a third speed if it is determined that the rainfall value is greater than the second rainfall threshold, where the third speed is greater than the second speed. That is, larger rainfall indicates a higher speed at which the wiper is controlled to act. In the example, the speed gear may be based on the rainfall and the speed of the wiper action, so that the driver can see road conditions ahead clearly, which can prevent the blurred vision of the driver caused by a large amount of accumulated water on the vehicle window, thereby improving the driving safety.

In the example, different speed gears of the wiper can be provided based on different rainfall, such as providing a high speed gear and a low speed gear, or providing a high speed gear, a medium speed gear and a low speed gear, or providing more specific gears according to the rainfall. This is not specifically limited here. During the driving process, the UWB sensor detects rainfall in real time, determines a target speed gear for controlling an action of the wiper according to the rainfall value, and controls the wiper to act at a speed of the target speed gear, so that the wiper action speed can be automatically controlled without manual adjustment by the user, and can adapt to current rainfall, thereby improving driving safety of the user.

As shown in FIG. 5, when the driver encounters rainy weather during driving, the UWB sensor enters an operating state from a sleep state, and sends detected rainfall information to the BCM terminal through the CAN bus as message information, and the BCM automatically closes the sunroof or the vehicle side window, with no need to manually close the vehicle window and the sunroof by the user. The BCM adjusts the action speed of the wiper according to a rainfall magnitude detected in real time. For example, when it is detected that the rainfall is in a light rain state, the BCM automatically adjusts the wiper to act at a low speed, or when it is detected that the rainfall is in a moderate rain state, the BCM automatically adjusts the wiper to act at a medium speed, or when it is detected that the rainfall is in a heavy rain or rainstorm state, the BCM automatically adjusts the wiper to act at a high speed. Based on UWB rainfall detection, the driver does not need to manually adjust the action speed of the wiper, which assists the driver in driving safely in a rainstorm weather scenario and provides a strong guarantee for safe travel of the vehicle.

Further, with the increase of rainfall, there is a safety hazard when the vehicle speed is too high. In the example of the present disclosure, in-vehicle multimedia is controlled to perform rainfall prompting and speed limit warning, and the vehicle is controlled to drive at a limited speed in the case of rainfall, in response to the rainfall value being greater than the second rainfall threshold. The limited speed in the case of rainfall may be a lower speed to improve driving safety on a rainy day. For example, as shown in FIG. 5, when it is detected that the rainfall is in a heavy rain or rainstorm state, the BCM automatically adjusts the wiper to act at a high speed, and limits the vehicle speed to drive at a low speed. In addition, a central control computer 60 informs, in a manner of voice broadcast by an external power amplifier, the driver that the current vehicle speed is limited to a low speed state, to remind the driver to drive safely at a low speed. The driver may alternatively set the vehicle to an automatic cruise mode according to the driver's own needs, so that the vehicle can automatically drive to a safe place.

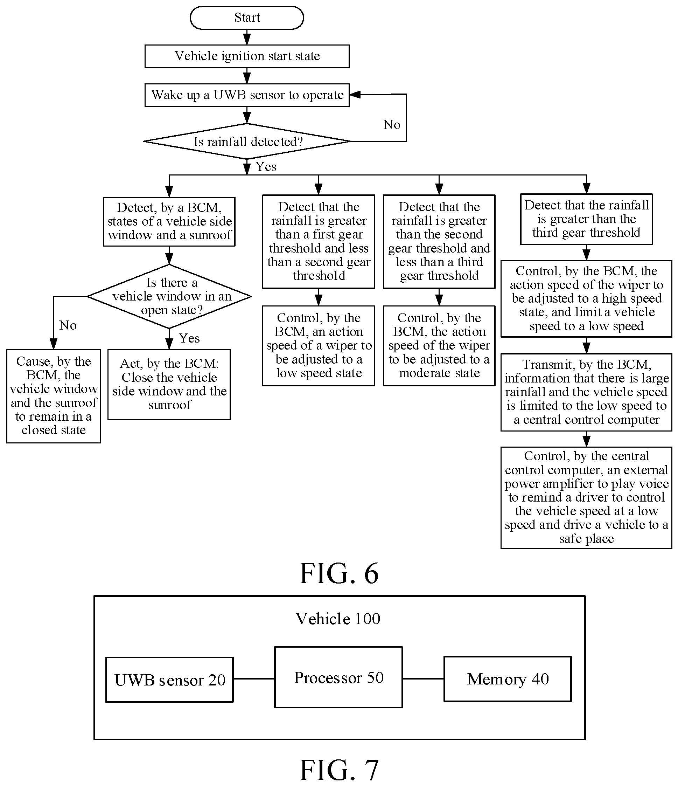

Specifically, FIG. 6 is a flowchart of a method for controlling a vehicle window and a wiper when a vehicle is in a driving state according to an example of the present disclosure. As shown in FIG. 5 and FIG. 6, when the vehicle is in an ignition start-up and driving state, the UWB sensor starts to detect the rainfall in real time. When it is detected the water content in the air increases to θ, a microprocessor of the UWB sensor, that is, the control module, determines that there is rainfall, and transmits the message information to the BCM through the CAN bus. The BCM starts to detect a state of the vehicle window or the sunroof and adjust the action speed of the wiper and the vehicle speed. When the BCM detects that the vehicle window and the sunroof are in a closed state, the BCM causes the vehicle window and the sunroof to remain in the closed state, or when the BCM detects that the vehicle window or the sunroof is in an open state, the BCM controls the vehicle window and the sunroof to close through the LIN bus. In addition, when the UWB sensor detects that the water content θ in the air is greater than the first gear threshold θ1 and less than a second gear threshold θ2, the message information is transmitted to the BCM through the CAN bus, and the BCM controls the action speed of the wiper to be adjusted to a low speed state. When the UWB sensor detects that the water content θ in the air is greater than the second gear threshold θ2 and less than a third gear threshold θ3, the message information is transmitted to the BCM through the CAN bus, and the BCM controls the wipe actuator to be adjusted to a moderate state. When the UWB sensor detects that the water content θ in the air is greater than the third gear threshold θ3, the message information is transmitted to the BCM through the CAN bus, and the BCM controls the action speed of the wiper to be adjusted to a high speed state, limits the current vehicle speed, and transmits the message information that there is large rainfall and the vehicle speed is limited to the central control computer 60 through the CAN bus. The central control computer 60 controls the external power amplifier to broadcast voice to remind the driver to control the vehicle speed within a defined low speed range and drive the vehicle to a safe place.

To sum up, in the vehicle control method according to the example of the present disclosure, the rainfall is detected by the UWB technology to intelligently control open and closed states of the vehicle window and the sunroof, and adjust the action speed of the wiper according to the rainfall amplitude. By the principle that electromagnetic waves emitted by the UWB sensor have different propagation times in different media, the moisture content in the air can be detected automatically, and a real-time state of weather can be detected when the vehicle window and the sunroof are in an open state. A rainfall detection sensor based on the UWB technology has the advantages of high detection precision, high reliability, convenient mounting, low costs and simple algorithm, and closely relates the rainfall magnitude detected in real time to logic of vehicle body state control (such as sunroof and vehicle window opening-closing control, wiper speed adjustment, and vehicle speed adjustment), which implements a diversified control application of the rainfall detection on the vehicle based on the UWB technology. In addition, the rainfall detection control based on the UWB technology can automatically close the vehicle window and the sunroof of the vehicle in rainy weather, and can assist the driver to drive safely on a rainy day, thereby improving user experience.

An example of a second aspect of the present disclosure proposes a vehicle. As shown in FIG. 7, the vehicle 100 includes a UWB sensor 20, a memory 40, and at least one processor 50. The UWB sensor 20 is arranged on a vehicle body, such as a top of the vehicle, a top of a front end, a top of a rear end or a top end of a middle portion of the vehicle, or another place thereof at which rainfall can be detected. This is not specifically limited here. The UWB sensor is configured to detect a rainfall value. Specifically, the UWB sensor 20 emits an electromagnetic wave, receives an electromagnetic wave propagating in the air, and obtains the rainfall value according to a time of flight of the received electromagnetic wave. The memory 40 stores a computer storage medium that can be executed by the at least one processor 50. The at least one processor 50, when executing the computer program, implements the vehicle control method according to any example of the first aspect of the present disclosure. The processor 50 may be a domain controller of the vehicle 100, such as a body control module.

As a computer-readable storage medium, the memory 40 may be configured to store a software program and a computer-executable program, such as program instructions/modules corresponding to the method according to each example of the present disclosure. The processor 50 executes functional applications and data processing by running the software program, instructions and modules stored in the memory 40, to implement the vehicle control method according to any of the above method examples.

An example of a third aspect of the present disclosure proposes a readable computer storage medium. The computer-readable storage medium stores a computer program, and the computer program, when executed by a processor, implements the vehicle control method according to any example of the first aspect of the present disclosure. The above computer-readable storage medium may be a transient computer-readable storage medium or a non-transient computer-readable storage medium.

In the vehicle 100 according to the example of the present disclosure, the rainfall is detected by the UWB sensor 20, and the UWB sensor 20 emits an electromagnetic wave, which is less affected by the environment and has high anti-interference performance, so that the detected real-time rainfall value is more accurate and stable. Moreover, the UWB sensor 20 obtains the rainfall through a time of flight of the electromagnetic wave, and an algorithm principle is simple. The rainfall detection is combined with the vehicle window control, thereby enriching the application of the rainfall detection in vehicle control. When the rainfall value is greater than the window closing rainfall threshold, the opened vehicle window is controlled to close, so that rainwater, especially rainstorm water, can be prevented from entering the vehicle, thereby avoiding an economic loss caused to the user when the vehicle window is not closed in the case of rainfall.

In addition, when the vehicle is in a driving state, the rainfall detection can be further combined with wiper speed control without manual adjustment by the driver, thereby improving driving safety.

In the description of this specification, the description with reference to the terms such as "an embodiment", "some embodiments", "an illustrative example", "an example", "a specific example", or "some examples" means that specific features, structures, materials, or characteristics described with reference to the example or example are included in at least one example or example of the present disclosure. In this specification, the illustrative expressions of the above terms do not necessarily refer to the same example or example.

Although the examples of the present disclosure have been shown and described, it can be understood by a person of ordinary skill in the art that many changes, modifications, replacements and variations may be made to these examples without departing from the principles and purposes of the present disclosure, and the scope of the present disclosure is defined by the claims and equivalents thereof.

## Claims

1. A vehicle control method, the vehicle being provided with a UWB sensor configured to measure a rainfall value, the method comprising:
waking up the UWB sensor in response to a trigger instruction for starting rainfall detection, to cause the UWB sensor to measure a rainfall value;
acquiring the rainfall value measured by the UWB sensor; and
controlling the vehicle to execute a preset control instruction action according to the rainfall value.

2. The vehicle control method according to claim 1, wherein the vehicle comprises a vehicle window, and controlling the vehicle to execute the preset control instruction action according to the rainfall value comprises:
determining that the rainfall value reaches a preset window closing rainfall threshold, and controlling the vehicle window to close, in response to detecting that the vehicle window is in an open state.

3. The vehicle control method according to claim 2, wherein the vehicle comprises a wiper, and controlling the vehicle to execute the preset control instruction action according to the rainfall value further comprises:
determining that the rainfall value meets a preset rain wiping condition, and controlling the wiper to wipe rain at a target speed, in response to detecting that the vehicle is in a driving state,
wherein the target speed is determined according to a preset mapping relationship, and the mapping relationship represents a corresponding relationship between a speed of the wiper and the rainfall value.

4. The vehicle control method according to claim 3, wherein the rain wiping condition is that the rainfall value is greater than the window closing rainfall threshold, and controlling the wiper to wipe rain at the target speed comprises:
determining a target speed gear for an action of the wiper according to the rainfall value, and controlling the wiper to wipe rain at a speed of the target speed gear.

5. The vehicle control method according to claim 4, wherein determining the target speed gear for controlling the action of the wiper according to the rainfall value, and controlling the wiper to wipe rain at the speed of the target speed gear comprises:
controlling the wiper to act at a first speed if the rainfall value is greater than the window closing rainfall threshold and less than a first rainfall threshold, or
controlling the wiper to act at a second speed if the rainfall value is greater than the first rainfall threshold and less than a second rainfall threshold, the second speed being greater than the first speed, or
controlling the wiper to act at a third speed if the rainfall value is greater than the second rainfall threshold, the third speed being greater than the second speed,
wherein the first rainfall threshold is greater than the window closing rainfall threshold, and the second rainfall threshold is greater than the first rainfall threshold.

6. The vehicle control method according to claim 5, further comprising:
controlling in-vehicle multimedia to perform rainfall prompting and speed limit warning, and controlling the vehicle to drive at a limited speed in the case of rainfall, in response to the rainfall value being greater than the second rainfall threshold.

7. The vehicle control method according to claim 1, wherein the vehicle comprises a vehicle window, and before the response to a trigger instruction for starting rainfall detection, the vehicle control method further comprises:
sending the trigger instruction for starting rainfall detection when it is detected that the vehicle is in a power-off state and the vehicle window of the vehicle is in an open state, or
sending the trigger instruction for starting rainfall detection when it is detected that the vehicle is in an ignition state.

8. The vehicle control method according to claim 7, further comprising:
controlling the UWB sensor to remain in a sleep state when it is detected that the vehicle is in the power-off state, and it is detected that the vehicle window of the vehicle is in a closed state.

9. The vehicle control method according to any one of claims 1 to 8, wherein waking up the UWB sensor, to cause the UWB sensor to measure the rainfall value comprises:
controlling a signal emitter of the UWB sensor to emit an electromagnetic wave signal;
controlling a signal receiver of the UWB sensor to receive the electromagnetic wave signal propagated through a preset spatial range; and
calculating and obtaining the rainfall value according to a time of flight of the received electromagnetic wave signal.

10. A vehicle (100), comprising:
a UWB sensor (20), the UWB sensor (20) being configured to detect a rainfall value;
at least one processor (50); and
a memory (40), the memory (40) storing a computer program executable by the at least one processor (50), and the computer program, when executed by the at least one processor (50), implementing the vehicle control method according to any one of claims 1 to 9.

11. The vehicle (100) according to claim 10, wherein the UWB sensor (20) is arranged on a vehicle body of the vehicle (100).

12. The vehicle (100) according to claim 11, wherein the UWB sensor (20) is arranged at a top of a front end of the vehicle (100), a top of a rear end of the vehicle or a top of a middle portion of the vehicle.

13. The vehicle (100) according to any one of claims 10 to 12, wherein the UWB sensor (20) comprises:
a UWB signal emitter (21), the UWB signal emitter (21) being configured to emit an electromagnetic wave signal;
a UWB signal receiver (22), the UWB signal receiver (22) being configured to receive the electromagnetic wave signal propagated through a preset spatial range; and
a control module (23), the control module (23) being configured to calculate and obtain the rainfall value according to a time of flight of the received electromagnetic wave signal.

14. The vehicle (100) according to any one of claims 10 to 13, wherein the UWB signal emitter (21) and the UWB signal receiver (22) are arranged at a top of the vehicle (100), and the UWB signal receiver (22) is arranged opposite to the UWB signal emitter (21) at a preset distance.

15. A computer-readable storage medium, which stores a computer program, the computer program, when executed by a processor, implementing the vehicle control method according to any one of claims 1 to 9.
